Europäisches Patentamt

European Patent Office

Office européen des brevets

(11) Numéro de publication: **0 450 257 B1**

(12) **FASCICULE DE BREVET EUROPEEN**

(45) Date de publication de fascicule du brevet: **11.01.95**

(51) Int. Cl.6: **F04B 5/00**, B01D 61/06, F04B 9/10, F04B 7/00, F25B 15/02

(21) Numéro de dépôt: **90830140.1**

(22) Date de dépôt: **03.04.90**

(54) **Machine hydraulique apte à réaliser en même temps la détente d'un liquide et le pompage d'un autre liquide.**

(43) Date de publication de la demande:
**09.10.91 Bulletin 91/41**

(45) Mention de la délivrance du brevet:
**11.01.95 Bulletin 95/02**

(84) Etats contractants désignés:
**BE CH DE ES FR GB IT LI NL SE**

(73) Titulaire: **Laratta, Fabio**
**Via Conca 11**
**I-00197-Rome (IT)**

(72) Inventeur: **Laratta, Fabio**
**Via Conca 11**
**I-00197-Rome (IT)**

(56) Documents cités:
**EP-A- 0 048 139     DE-A- 2 442 741**
**DE-A- 2 444 740     DE-C- 128 001**
**FR-A- 2 342 352     US-A- 3 558 242**
**US-A- 4 187 173     US-A- 4 288 326**
**US-A- 4 432 876     US-A- 4 534 713**

**ENERGY, vol. 6, 1981, pages 227-231, Pergamon Press Ltd; M. REALI: "Submarine hydroelectro-osmotic power plants for an efficient exploitation of salinity gradients"**

Rank Xerox (UK) Business Services
(3.10/3.09/3.3.3)

EP 0 450 257 B1

## Description

l'objet de la présente invention est une machine hydraulique de déplacement a piston (ou à plongeurs), qui peut échanger du travail mécanique avec l'extérieur et qui réalise en même temps le pompage d'un liquide et la détente d'un autre liquide avec la récupération de son énergie hydraulique de pression, qui peut être utilisée, par exemple, dans les installations de dessalement de l'eau de mer par osmose inverse, composée par un système d'entraînement, par exemple, mécanique, qui imprime un mouvement rectiligne alternatif à un ou à plusieurs pistons (ou plongeurs), dont cetrains sont différentiels et insérés dans des cylindres à double effet. Une telle machine est décrite dans le document US-A-4 432 876 qui sert de base au préambule de la revendication 1.

Dans certaines installations actuellement existantes, par exemple, dans les procédé à membrane, de traitement des eaux par osmose inverse et dans les machines thermiques à absorption, et dans des procédés qui ne sont pas encore appliqués industriellement, par exemple, dans l'exploitation des gradients de salinité pour la production d'énergie par osmose directe, il est nécessaire de pomper un liquide et d'en détendre un autre, en même temps.

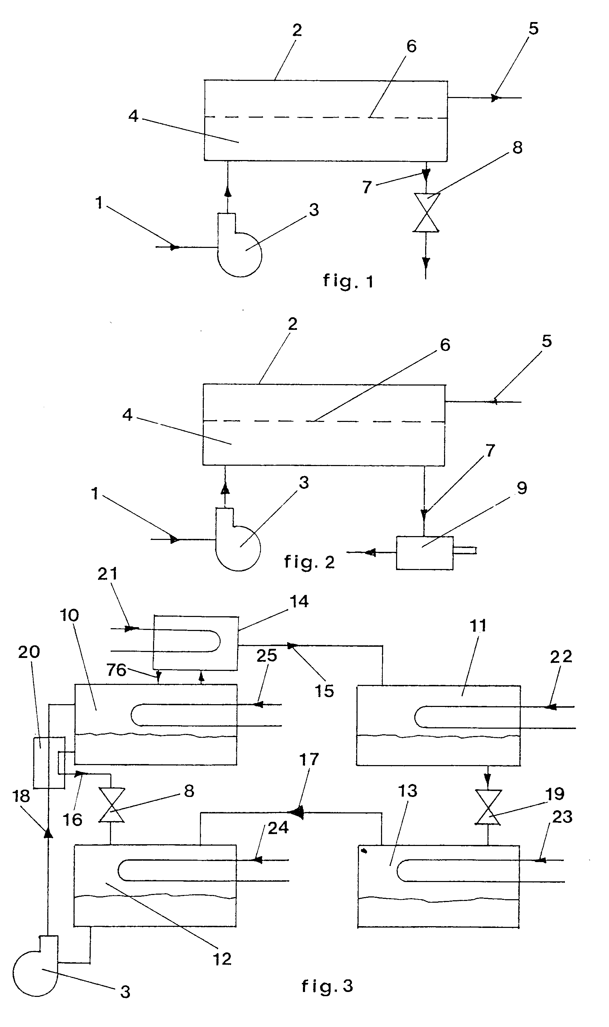

Une description des procédés à membrane, pour le traitement des liquides par osmose inverse se trouve dans la revue "Energie Alternative HTE" année 2, numero 4, Mars-Avril 1980, pages 121-129. Un exemple de procédé par osmose inverse est illusté dans le schéma de figure 1 et se réfère à une installation pour le dessalement de l'eau de mer: un débit $Q1'$ d'eau de mer 1 est aspirée et envoyée sous pression dans un module à membranes semi-perméable 2 à l'aide d'une pompe 3; la pression hydraulique de la solution 4 à l'interieur du module 2 est plus élevée que la pression osmotique moyenne de la solution; par conséquent un débit $Q3'$ d eau presque pure 5 traverse la membrane 6 et sort du module à pression atmosphérique; le débit $Q2'$ de solution plus concentrée 7 qui reste, retourne à pression atmosphérique en traversant la vanne de régulation 8.

Un article concernant l'exploitation des gradients de salinité par le procédé "PRO", est contenu dans la Revue "Energy", Volume 6, année 1981, pages 227-228. Dans la figure 2 il est illustré un exemple de ce procédé: un débit $Q1''$ d'eau de mer 1 est porté de pression atmosphérique Pa, à pression $P2''$ et envoyé dans un module à membrane semi-perméable 2 à l'aide d'une pompe 3; la pression $P2''$ à l'interieur du module, contrairement à ce qu'il arrive dans procédés par osmose inverse, est inferieure à la pression osmotique moyenne dans le module 2, par conséquent, on a un passage spontané d'un débit $Q3''$ d'eau douce a la pression atmosphérique 5 dans la solution 4 à travers la membrane 6; un débit $Q2'' = Q1'' + Q3''$, 7, sort donc du module, à pression $P3''$, et se détend à pression atmosphérique Pa, en cédant son énergie hydraulique au moteur hydraulique 9. Puisque $P2'' \approx P3''$, un tel système peut débiter une puissance égale à $W \approx Q3'' \cdot (P2''-Pa)$.

Une description des machines thermiques à absorption se trouve dans le texte "Lezioni di Fisica Tecnica", auteur M. Felli, editeur ESA, Milan 1990, pages 431-503. Elles peuvent être utilisées soit en temps que machines frigorifiques, qu'en temps que pompes à chaleur. Dans la figure 3 est illustée le schéma fonctionnel d'une machine frigorifique à absorption au mélange eau-ammoniac: le système bouilleur 10 - condenseur 11 se trouve à une pression $P2'''$ plus élevée que le système absorbeur 12 - évaporateur 13; le fonctionnement de la machine demande la circulation de la solution employée d'eau et d'ammoniac entre le bouilleur 10 et l'absorbeur 12. Un débit $Q1'''$ de solution 18 est envoyé de l'absorbeur 12 au bouilleur 10 à l'aide d'une pompe 3; pendant le passage dans le bouilleur 10 une certaine quantité d'eau et d'ammoniac s'évapore; la vapeur d'eau et une partie de la vapeur d'ammoniac se condense dans le séparateur 14 et retourne en forme liquide 76 dans le bouilleur 10, tandis qu'un débit $Q3'''$ d'ammoniac 15 se dirige vers le condenseur 11 et condense dans celui-ci; le débit $Q2'''$ de solution riche 16 qui sort du bouilleur 10, traverse la vanne de régulation 9 et retourne à l'absorbeur 12; en traversant l'absorbeur 12 la solution absorbe un débit $Q3'''$, d'ammoniac à l'état de vapeur 17, provenant de l'évaporateur 13. le passage de l'ammoniac du condenseur 11 à l'évaporateur 13 se réalise à travers la vanne de régulation 19. les solutions 16 et 18 échangent de la chaleur dans l'échangeur 20. Les flux 21, 22, 23, 24 et 25 assurent les échanges de chaleur dans les appareils 10, 11, 12, 13 et 14.

Dans les trois procédés cités il est toujours nécessaire de pomper un débit Q1 de liquide de la pression P1 à la pression P2, d'en détendre un autre Q2 de la pression P3 à la pression P4 et d'échanger du travail mécanique avec l'extérieur, car dans les procédés par osmose inverse et dans les machines thermiques à absorption à cycle continu, l'énergie maximale qu'on peut récupérer du liquide qui se détend ne suffit pas à assurer le pompage de l'autre liquide. Actuellement pour remplir ces tâches,en récupérant l'énergie hydraulique du liquide qui se détend, on peut employer deux machines différentes: une pompe hydraulique et un moteur hydraulique. Les avantages dus au recouvrement de l'énergie hydraulique du liquide qui se détend ne suffisent souvent pas à compenser le coût d'un moteur hydraulique, nécessaire à ce but, et on préfère détendre le liquide à l'aide d'une vanne de régulation 8, comme il est illusté dans les schémas des figures 1 et 3. Avec l'emploi, dans ces installations, d'une pompe et d'un moteur hydraulique séparés, on a l'inconvenient que le travail mécanique résistant accompli par le liquide pompé et le travail mécanique moteur accompli par le liquide qui se détend, s'exércent sur des organes mécaniques différents, et il ne peut pas y avoir de compensation directe des forces exercées par les deux liquides. Cette compensation permetterais de dimensionner les parties mécaniques pour des forces moindres.

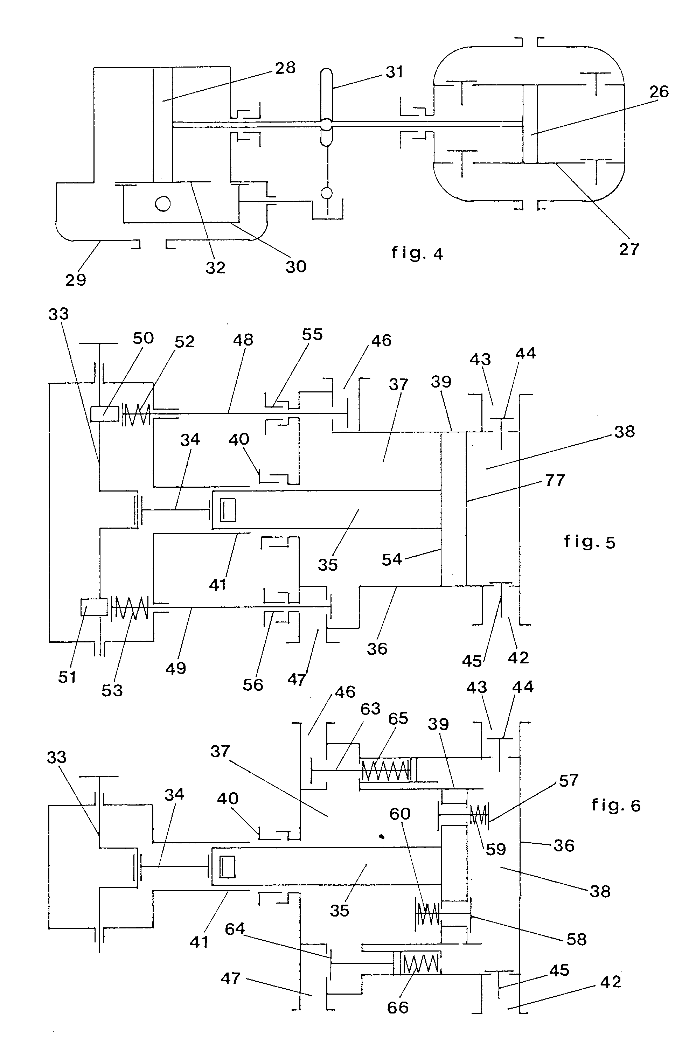

On connaît, haujourd'hui, des machines qui réalisent en même temps le pompage d'un liquide et la détente d'une vapeur et dans lesquelles les deux fluides accomplissent le travail mécanique sur le déplacement d'un même organe mécanique: ce sont les pompes à vapeur. Une description de ces machines se trouve dans le texte "Pump Handbook, McGRAW-HILL BOOK COMPANY, New York ..., chapitre 3.2. Dans la figure 4 est illustré le schéma d'une pompe à vapeur du type duplex; son fonctionnement est le suivant: le piston 26 qui assure le pompage du liquide dans le cylindre 27 est actionné directement par le piston 28 d'une machine à vapeur 29, avec distribution à tiroir 30 actionné par l'élément 31. Les pompes à vapeur ne constituent pas des exemples de machines qui soient à la fois des pompes et des moteurs hydrauliques, car elles ne sont pas conçues pour assurer la récupération de l'énergie hydraulique d'un liquide mais plustôt d'une vapeur.

Une machine structurée comme une pompe à vapeur, qui soit conçue pour réaliser en même temps le pompage et la détente de deux liquides ne serait pas apte à être utilisée dans les installations citées précédemment, car les pompes à vapeur ne sont pas conçues pour échanger du travail mécanique avec l'exterieur.En plus, dans les pompes à vapeur la détente de la vapeur et le pompage du liquide se produisent dans deux cylindres différents (27 et 32 dans le cas de figure 4) et opposés; cette disposition rend difficile la transformation du mouvement alternatif du piston en mouvement rotatif, pour que la machine puisse échanger du travail mécanique avec l'extérieur.

Les brevets US-A-3558242 (W.D. Jenkin Thomas) et EP-A-0048139 (The Labour Group LTD) décrivent des dispositifs conçus pour pallier au susdits inconvénients. Ils resolvent le problème de concevoir une machine qui soit à la fois une pompe et un moteur hydraulique, qui soit à même d'échanger travail mécanique avec l'extérieur et dans laquelle les deux liquides échangent un travail mécanique sur le déplacement d'un même organe mécanique. Ce résultat est obtenu selon le schema général de figure 5 en employant des cylindres à double éffet dans lesquels sont insérés des pistons différentiels, ceux-ci divisent le volume contenu à l'interieur du cylindre en deux chambres: dans une des deux chambres se produit la détente d'un liquide, dans l'autre chambre se produit le pompage de l'autre liquide; les deux liquides accomplissent le travail mécanique sur le déplacement du même piston différentiel. Dans la suite de ce texte on appellera ces deux chambres: "chambre de détente" et "chambre de pompage".

Les avantages obtenus avec cette configuration, par rapport aux pompes et aux moteurs hydrauliques à pistons sont que les contraintes qui s'exercent sur le système d'entraînement qui meut les pistons sont normallement moindres, que les étanchéifications entre les chambres de détente et de pompage d'un même cylindre sont soumises à des differences de pression inferieures et qu'on à un seul système mécanique pour mouvoir les pistons au lieu de deux dans le cas où on emploie deux machines séparées, et que en ayant obtenu la chambre de détente et de pompage dans le même cylindre à double effet, par l'insertion d'un piston différentiel, une des extrémités de ce piston, reste libre, et peut être liée à un dispositif mécanique avec bielle et manivelle. En outre, comme on le verre dans le suite, on peut envisager pour cette machine des systèmes pour actionner la distribution dans la chambre de détente, qui ne peuvent pas être employés dans le moteurs hydrauliques conventionnels. En vertu de ces avantages, le coût de cette machine pourra être inferieur au coût total d'une pompe et d'un moteur hydraulique ayant les mêmes performances.

dans la suite de ce texte on appellera P1, P2 et Q1 respectivement les pressions d'adduction et de refoulement et le débit du liquide à pomper, on appelera P3, P4 et Q2 respectivement les pressions d'adduction et de refoulement et le débit du liquide à détendre, on utilisera les sigles "PMS" et "PMI" pour indiquer respectivement les positions de point mort supérieur et de point mort inférieur d'un entraînement mécanique avec arbre coudé et manivelle, on indiquera avec la dénomination de "valves de distribution" un ou plusieurs dispositifs, valves ou distributeurs, aptes à régler les flux, du tuyau d'adduction à la chambre de détente et de la chambre de détente au tuyau de refoulement, du liquide à détendre, appartenants à l'état actuel de la technique et on indiquera avec la dénomination de "distribution de la chambre de détente", le fonctionnement de ces valves de distribution et des systèmes de commande qui les actionnent. Pour les dénominations des différents élements, et pour la représentation des dessins on s'est référé au texte "Dictionary of Hydraulic Machinery",auteur Adam Tadeusz Troskolanski, éditeur ELSEVIER, Amsterdam - Oxford - New York, 1985.

Les dessins 5, 6, 7 et 8 représentent, en section, des schémas fonctionnels de machines à un cylindre, à l'instant du PMS. La machine illustrée en figure 5 se compose d'un arbre coudée 33 lié à une bielle 34 qui imprime un mouvement rectiligne alternatif au piston différentiel 35 liée au guide 41 et inséré dans le cylindre 36. Le volume renfermé a l'interieur du cylindre est divisé en deux chambres 37 et 38. Les étainchéifications 39 et 40 entre le piston différentiel 35 et le cylindre 36 empêchent le passage du liquide. La chambre 38 communique avec les deux tuyaux 42 d'adduction et 43 de refoulement du liquide à pomper à travers les soupapes de non-retour 44 et 45 dont la soupape 45 permet seulement l'entrée du liquide dans la chambre et la soupape 44 en permet seulement la sortie. La chambre 37 communique avec les tuyaux 46 d'adduction et 47 de refoulement du liquide à détendre à traver des soupapes 48 et 49 commandées par les cames 50 et 51, solidaires à l'arbre coudé 33, dont l'action est contrastée par les ressorts 52 et 53; les étanchéifications 55 et 56 empêchent le passage du liquide; le système de distribution est tel que la soupape 48 est maintenue ouverte et la soupape 49 fermée, pendant une grande partie de la course du piston de gauche à droite; inversement la soupape 49 est maintenue ouverte et la soupape 48 fermée, pendant une grande partie de la course du piston de droite à gauche.

1) Fonctionnement de la machine:

Le fonctionnement de la machine décrite dans la figure 5 peut être divisée en quatre phases qui se caratérisent de la manière suivante:

1.1) "Phase "passive": le piston 35 se meut de la droite vers la gauche, la soupape 49 est ouverte et la soupape 48 est fermée. Le volume de la chambre 38 augmente et attire le liquide provenant du tuyau 42 à pression P1; le volume de la chambre 37 diminue et le liquide qu'elle contient est envoyé dans le tuyau 47 à la pression P4.

1.2) "Phase de première inversion": cette phase se réalise à cheval du PMI: la soupape 49 se ferme, successivement la soupape 48 s'ouvre: la pression à l'interieur de la chambre 37 passe de P4 à P3. Lors du PMI la direction du mouvement du piston change et la pression du fluide contenu dans la chambre 38 passe de P1 à P2.

1.3) "Phase active": le piston se meut de la gauche vers la droite, la soupape 48 est ouverte et la soupape 49 est fermée. Le volume de la chambre 38 diminue, le liquide qu'elle contient est envoyé dans le tuyau 43 à pression P2; le volume de la chambre 37 augmente et attire le liquide provenant du tuyau 46 à pression P3.

1.4) "Seconde inversion": cette phase se réalise à cheval du PMS: la soupape 48 se ferme, successivement la soupape 49 s'ouvre: la pression à l'interieur de la chambre 37 passe de P3 à P4. Lors du PMS, la direction du mouvement du piston change et la pression à l'interieur de la chambre 38 passe de P2 à P1.

Les débits Q1 du liquide pompé de pression P1 à P2 et Q2 du liquide qui se détend en diminuant sa pression de P3 a P4 sont proportionelS entre eux: en effet si on indique par S1 l'aire de la surface 77 du piston 35, S2 l'airs de la surface annulaire 54, S3 l'aire de la section plus étroite du piston differentiel 35 (on a: $S3 = S1-S2$), si on néglige las phénomènes qui se produisent lors des phases d'inversion, on a: $Q2/Q1 = S2/S1$. Dans les exemples de machines illustrées dans les figures 5, 6, 7 et 8, la chambre de détente se trouve du côté de la surface annulaire 54 du cylindre différentiel 35 et on a que $Q1 > Q2$. Pour obtenir $Q1 < Q2$ il suffit de mettre à la place des tuyaux 46, 47, et de leur système de distribution, les tuyaux 42 et 43 et leurs soupapes de non-retuor, et inversement: ainsi la chambre 38 devient chambre de détente et la chambre 37 devient chambre de pompage. En analysant le fonctionnement de la machine illustrée en figure 5 on peut en deduire deux conditions qui en exaltent les avantages, par rapport aux autres machines hydrauliques de déplacement, à pistons, actuellement existantes:

1.a) à mesure que diminuent les differences de pression $\delta P1 = |P1-P4|$ et $\delta P2 = |P2-P3|$ de l'installation car ce sont les différences de pression qui s'exercent sur les étanchéifications 39 entre les chambres de pompage et de détente d'un même cylindre, pendant les "phases active" et "passive";

1.b) à mesure que le rapport Q2/Q1 se rapproche de la valeur "1", quand la condition 1.a) précédente est vérifiée. cette condition se justifie de la manière suivante:

1.b.1) les avantages de la machine du point de vue mécanique, par rapport aux machines hydrauliques à pistons actuellement existantes, augmentent. En effet, la force transmise par le piston de la machine, pendant la "phase active" vaut $F2 = |(P1-Pa)-S3|$; la force maximale transmise par un piston de même dimension, appartenant à une pompe où à un moteur hydraulique à piston vaut $F2' = |(P1-Pa)-S1|$, si elle est à simple effet et $F2' = |(P1-P2)-S1|$ si elle est à double effet; souvent on à $P1 \approx Pa$ et on peut en conclure que $F2/F2' = S3/S1 = (1-Q2/Q1)$. Le système d'entraînement qui meut les pistons doit, normallement, être dimensionné selon les valeurs des forces F2 et F2', il en resulte que les avantages de la machine, du point de vue mécanique, sont d'autant plus grands que le rapport Q2/Q1 se rapproche de la valeur "1", car la valeur du rapport F2/F2' tend à diminuer.

1.b.2) à mesure que le rapport Q2/Q1 se rapproche de la valeur "1", le diamètre de la section plus étroite du piston différentiel 35 diminue, par conséquent le diamètre de l'étanchéification 40 diminue aussi, et sa réalisation en résulte simplifiée. Cet avantage est d'autant plus considérable que, comme il a été montré au point 1.a), lorsque la condition 1.a) est vérifiée, l'étanchéification 40 est soumise à des contraintes beaucoup plus importantes que l'étanchéification 39.

2) Emploi de la machine:

La machine décrite en figure 5 est particulierement propre à être employée dans les trois types d'installations citées précédemment, dans les procédés à membrane de traitement des liquides par osmose inverse, dans l'exploitation des gradients de salinité et dans les machines thermiques à absorption à cycle continue, pour les raisons suivantes:

2.1) Dans les trois cas il se vérifient la condition $Q1 \neq Q2$; cette condition permet d'employer une machine composée par des cylindres identiques, dont les aires S1 et S2 des surfaces 77 et 54 du piston différentiel 35 vérifient la condition $S1/S2 = Q1/Q2$.

2.2) dans les trois cas il se vérifie la condition $P1 \approx P4$ et $P2 \approx P3$ citée au point 1.a) qui est une des conditions qui exalte les avantages de la machine;

2.3) dans les installation qui réalisent des procédés à membrane pour le traitement des liquides par osmose inverse et pour l'exploitation des gradients de salinité, le rendment du procédé augmente à mesure que le rapport Q2/Q1 se rapproche de la valeur "1"; celle-ci est l'autre condition, citée au point 1.b), qui exalte les avantages de la machine. Ceci est montré dans les paragraphes qui suivent.

2.3.1) Dans les procédés de membrane pour le traitement des liquides par osmose inverse, le rendment peut être exprimée par le rapport entre le débit Q3 et la puissance absorbée par l'installation, $W = (Q1 \cdot (P2-P1) - Q2 \cdot (P3-P4))$: puisque il se vérifie la condition $P1 \approx P4$ et $P2 \approx P3$ on à que $W \approx Q3 \cdot (P1-P2)$ et donc $\epsilon = 1/(P2-P1)$: à mesure que le rapport Q1/Q2 se rapproche de la valeur "1" en étant $Q1 > Q2$, la concentration moyenne et la pression osmotique de la solution à l'interieur du module à membrane diminue; si le débit Q3 reste le même, la différence de pression (P2-P1) diminue et le rendment $\epsilon$ augmente.

2.3.2) Pour une installations qui exploite les gradients de salinité par un procédé d'osmose directe, le rendment peut être exprimée par le rapport entre la puissance mécanique produite et le débit Q3 d'eau douce consommée; en calculant comme précédemment on a que $\epsilon = (P2-P1)$: à mesure que le rapport Q1/Q2 se rapproche de 1, en étant $Q1 < Q2$, la concentration moyenne et la pression osmotique de la solution a l'interieur du module à membrane augmente; si le débit Q3 reste le même la différence de de pression (P2-P1) et donc le rendment $\epsilon$ augmentent.

3) Limitation de la différence de pression entre les chambres de détente et de pompage d'un même cylindre.

Les avantages énoncés aux points 1.a) et 1.b) peuvent être compromis par les phénomènes qui se produisent lors des "phases d'inversion". En effet, en se référant au chéma de figure 5, si on considère la "phase de première inversion", on a que la pression dans la chambre 38 passe de P1 à P2 et la pression dans la chambre 37 passe de P4 à P3: selon la manière dont se produisent ces variations, la différence de pression entre ces deux chambres peut dépasser, pendant quelques instants, les valeurs |P4-P1| et |P2-P3|, qu'on a pendant les "phases passive" et "active". La même observation peut être faite pour la "phase de seconde inversion". Par conséquent, pendant les "phases d'inversion", l'étanchéification 39 située entre les deux chambres 37 et 38 et le système mécanique qui meut les pistons peut être soumis à des forces plus élevées par rapport à celles qu'on a pendant les "phases active" et "passive". Selon l'intensité et la durée de ces pics de contrainte mécanique les deux avantages cités aux points 1.a) et 1.b) seront réduits. Cet inconvénient peut être évité en insérant dans la machine un ou plusieurs systèmes qui soient à même de limiter la différence de pression entre la chambres de pompage et la chambre de détente d'un même cylindre, lors des phases d'inversion. Ces systemes ont representé l'objet des brevets US 4,288,326 et US 4,432,876, trois manières particulieres de parvenir à ce rèsultat, sont les suivantes:

3.1) en mettant en communication la chambre de pompage et de détente d'un même cylindre par une ou plusieures soupapes.

3.1.1) Dans le cas de figure 6 on emploi les soupapes 57 et 58 fermées par les ressorts 59 et 60, qui permettent le passage du liquide entre les deux chambres lorsque la différence de pression entre celles-ci dépasse une certaine valeur. Ces soupapes doivent être réglées de façon à ce qu'elles restent fermées pendant les "phases active" et "passive".

3.1.2) on peut également employer des soupapes d'étranglement, qui peuvent se réduire à la limite, à un simple trou de communication entre le deux chambres; dans ce cas il y a aussi échange de fluide entre les deux chambres pendant les "phases active" et "passive". Selon la dimension de la section de passage du liquide dans ces soupapes, et selon le type d'installation qui emploie la machine, cet échange direct de liquide entre le deux chambres pourra ou non être toléré.

3.2) en interposant un ou plusieurs systèmes élastiques entre les chambres de pompage et de détente d'un même cylindre, par exemple, en interposant une membrane élastique. Ainsi les differences de pression entre ces chambres sont absorbées en partie par le déplacement du système; ce dernier tend toujours à récuperer sa position d'équilibre car c'est un système elastique. L'avantage de cette solution consiste en ce qu'on évite le mélange des liquides contenus dans les deux chambres.

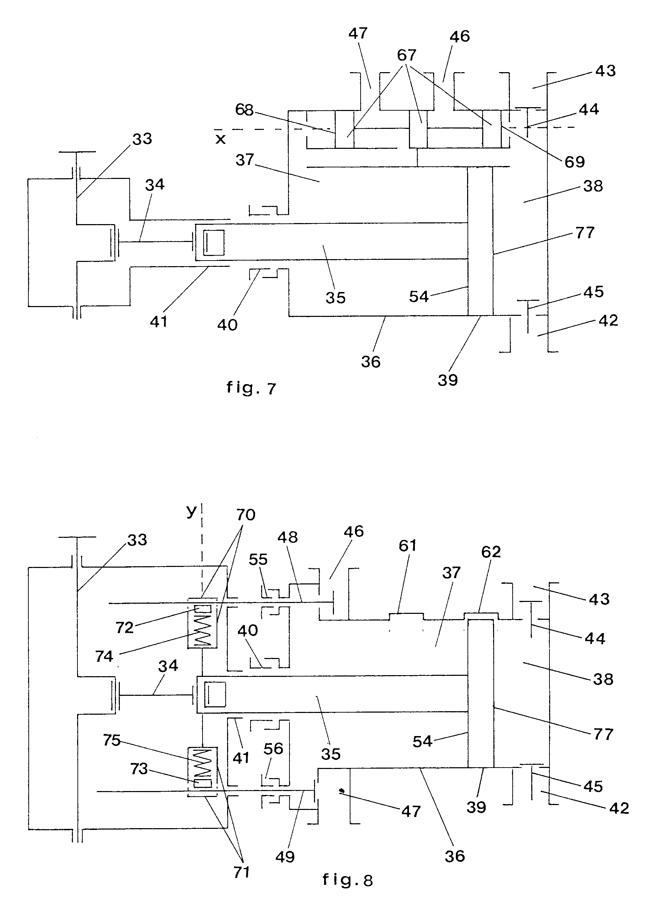

3.3) en mettant en communication directe la chambre de pompage et la chambre de détente d'un même cylindre, pendant les phases d'inversion, par exemple, comme il est illusté dans la figure 8, en pratiquant deux cannelures 61 et 62 sur les parois du cylindre 36, au niveau des positions acquises par le piston lors des PMI et PMS.

4) Distribution de la chambre de détente:

la structure de la machine de figure 5, permet d'envisager trois manières particulières de commander la distribution dans les chambres de détente, qui ne sont pas réalisées dans les moteurs hydrauliques à pistons actuellement existants, car elles dérivent de l'intéraction entre le fonctionnement des chambres des pompage et des chambres de détente d'un même cylindre; cette intéraction est rendue simple par le voisinage des deux chambres; Certains de ces systémés tout partie de l'etat de l'art et sout décrits dans les paragraphes 4.1) et 4.2) suivants.

4.1) distibution de la chambre de détente commandée par la pression dans la chambre de pompage du même cylindre. Cette solutions et proposée par le brevet FR-A-342,352 En effet, le variation de pression dans la chambre de pompage, par exemple dans la chambre 38 de la figure 5, se produit spontanément, comme dans une pompe à piston normale, lors des PMS et PMI, à cause du changement de direction du mouvement du piston; l'ouverture et la fermeture des systèmes qui assurent la distribution dans la chambre de détente, par exemple, des soupapes 48 et 49 de figure 5, doivent se produire aussi au voisinage des PMI et PMS, par conséquent elles peuvent être commandés par la pression de la chambre de pompage. Un exemple d'application de ce principe qui est aussi un exemple d'application de l'invention object de ce brevet est illustrée en figure 6: la soupape 63 s'ouvre quand la différence de pression entre la chambre 38 et le tuyau 46 qui se trouve à pression P3 suffit à vaincre la force exercée par le ressort 65, et se ferme en cas contraire; la soupape 64 s'ouvre quand la différence de pression entre le tuyau 47 et la chambre 38 suffit à vaincre la force exercée par le ressort 66 et se ferme on cas contraire. Les différences de pression (P4-P1) et (P2-P3) qui actionnent l'ouverture des soupapes 64 et 63 peuvent être augmentées, par exemple, avec l'introduction de soupapes d'étranglement placées à la sortie des tuyaux 47 et 43 qui ceusent l'augmentation des pressions P2 et P4.

4.2) distribution de la chambre de détente commandée par un distributeur entrainé par la différence de pression entre cette même chambre de détente et la chambre de pompage du même cylindre. Cette solution représente l'object du brevet US-A-4,534,713. Cette manière de commander la distribution de la chambre de détente se justifie de la même façon que celle précédente. Un exemple d'application de ce principe est illustrée dans la figure 7: selon la position occupée, le long de l'axe "x" par la valve de distribution 67, qui est equilibrée, c'est à dire, dans laquelle on a la compensation totale des forces hydrauliques de deux côtés de l'organe d'obturation lorsqu'elle est fermée ("DICTIONARY OF HYDRAULIC MACHINERY", cité précédemment, chapitre 2 (valves), définition 440) la chambre de détente 37 est mise en communication avec le tuyau 46 à la pression P3 ou avec le tuyau 47 a la pression P4, ou bien avec aucun des deux. Le déplacement de l'élément 67 est commandé par les pressions des chambres 37 et 38 qui agissent sur les surfaces 68 et 69. Quand, par exemple, la pression de la chambre 38 commence à augmenter, lors de la "phase de première inversion", l'élément 67 est soumis à une force résultante qui le déplace vers la gauche: par conséquent la section de passage entre la chambre 37 et le tuyau 47 tend à se fermer, et la section de passage entre la chambre 37 et le tuyau 46 tend à s'ouvrir, par conséquent, la pression dans la chambre 37 va également augmenter. La distribution dans la chambre de détente 37 est assurée car l'élément 67 se meut de façon a limiter les differences de pression entre les deux chambres; en employant ce système, on évite également l'inconvenient analysé précédemment, au point 3), des pics de contrainte mécanique lors des phases d'inversion.

4.3) L'object de la presente invention est representé par le système suivant pour commander la distribution des chambres de détente: à l'aide de soupapes non équilibrée, c'est à dire une soupape dont l'ouverture est contrastée par la différence de pression entre amont et aval de la soupape même, commandées par des systèmes qui impriment aux élements mobiles des soupapes, des forces contrôlées. Cette solution petit être appliquée dans le cas où la différence entre les pressions des chambres de détente et de pompage d'un même cylindre est limitée. Dans ce cas, en effet, la variation de pression qui se produit lors des PMI et PMS dans la chambre de pompage, se transmet dans la chambre de détente, et la force hydraulique qui s'oppose à l'ouverture des soupapes diminue: les soupapes s'ouvrent quand cette force hydraulique est diminuée suffisamment et prévaut la force controlée exercée par le système de commande.

Un exemple d'applicatione de ce principe est illustrée dans la figure 8: l'organe mobile d'obturation de la soupape 48 est serrée entre les éléments 70 et 72, par la force exercée par les ressorts 74; l'élément 70 est attaché au piston 35, l'élément 72 est libre de se déplacer sur l'axe "y" par rapport à l'élément 70; de même façon son liés les éléments 71, 73, le ressort 75 et l'organe mobile d'obturation de la soupape 49. Pendant la "phase active", la soupape 48 est ouverte et la soupape 49 est fermée. Une fois dépassé le PMS, le piston se met à bouger de la droite vers la gauche: les forces de friction entre les éléments 70 et 72 et l'organe mobile de la soupape 48, causent la fermeture de la soupape 48, tandis que la force de fiction que les éléments 71 et 73 exercent sur l'organe mobile d'obturation de la soupape 49 ne suffit pas, initialement, à vaincre la force hydraulique qui s'oppose a l'ouverture de la soupape 49. Cependent, après le PMS le volume total des chambres 37 et 38 se met à augmenter, par consequent, après la fermeture de la soupape 48, la pression dans les deux chambres, qui communiquent à travers la cannelure 62, se met à diminuer. La soupape 49 va s'ouvrir quand la difference de pression entre la chambre 37 et le tuyau 47 est suffisamment diminuée, et la force de friction l'emporte sur les forces hydrauliques. Un mécanisme analogue règle l'ouverture de la soupape 48, après le PMI. Cette solution présente l'avantage, par rapport à d'autres systemes de commande mécanique, par exemple celui de figure 5 qui emploie les cames 50 et 51, que la liaison des éléments 70, 71, 72, et 73 aux organes mobiles d'obturation des soupapes 48 et 49, en étant une liaison de force, ne démende pas d'être réalisée en un point précis.

## Revendications

1. Machine hydraulique de déplacement à pistons (ou à plongeurs) qui peut échanger du travail mécanique avec l'extérieur et qui réalise, en même temps, le pompage d'un fluide et la détente d'un autre avec le recouvrement de l'énergie hydraulique de pression, qui peut être utilisé, par exemple, dans les installations pour le dessalement de l'eau de mer par osmose inverse, composée par un système d'entrainement, par exemple un mécanisme à manivelle, qui imprime un mouvement rectiligne alternatif à un ou plusieurs pistons (ou plongeurs), dont certains sont des pistons (ou plongeurs) différentiels (35) insérés dans des cylindres à double effet (36), dont le volume est divisé en deux chambres (37) et (38) par le piston (ou plongeur) différentiel (35) et par des systèmes d'étanchéité, une des deux chambres, qu'on nomme "chambre de pompage" (38), communique avec un tuyau d'adduction (42) et de refoulement (43) du liquide à pomper, à travers des soupapes de non-retour (44) et (45), de manière à réaliser le pompage de ce liquide, tandis que l'autre chambre, qu'on nomme "chambre de détente" (37), comunique avec des tuyaux d'adduction (46) et de refoulement (47) du fluide à détendre à traver une ou plusieures valves de distribution commandées, d'adduction (48,63) et de refoulement (49,64), qui mettent en comunication la chambre de détente avec le tuyau d'adduction (46) du fluide à détendre pendant une fraction du cycle où, dans l'ensemble, la chambre de détente augmente son volume, et mettent en comunication la chambre de détente avec le tuyau de refoulement (47) du liquide à détendre pendant une fraction du cycle où, dans l'ensemble, la chambre de détente diminue son volume, comprenant un ou plusieurs dispositifs, aptes à limiter la différence de pression entre la chambre de détente et celle de pompage d'un même cylindre caractérisée en ce que les valves de distribution commandées sont des soupapes non complètement équilibrées, c'est à dire des soupapes dont l'ouverture est contrastée par la différence de pression en amont et en aval de la soupape, commandées par un système capable d'éxercer une force limitée sur les organes mobiles d'obturation de ces soupapes et par le fait que le système qui commande la soupape (48,63) d'adduction du fluide dans la chambre de détente soit à même d'exercer une force maximale sur l'obturateur de celle-ci pas suffisante à en déterminer l'ouverture en présence du gradient de pression existant entre amont et aval de la soupape aux alentours du point mort dans lequel le volume de la chambre de détente est minimal, et par le fait que le système qui commande la soupape (49,64) de refoulement du fluide dans la chambre de détente soit à même d'exercer une force maximale sur l'obturateur de celle-ci pas suffisante à en déterminer l'ouverture en présence du gradient de pression existant entre amont et aval de la soupape aux alentours du point mort dans lequel le volume de la chambre de détente est maximal, en obtenant ainsi que l'ouverture de la soupape d'adduction (48,63) soit subordonnée au dépassement du point mort dans lequel le volume de la chambre de détente est minimal et à la fermeture de la soupape de refoulement (49,64), et que l'ouverture de la soupape de refoulement (49,64) soit subordonnée au dépassement du point mort dans lequel le volume de la chambre de détente est maximal et à la fermeture de la soupape d'adduction (48,63), aux quels suit la diminution du gradient de pression en amont et aval de la soupape (49,64).

2.   Machine hydraulique selon la revendication 1 caractérisée par le fait que les systèmes d'actionnement des soupape de distribution (48) et (49) de la chambre de détente sont composés de premiers éléments (70,71) animés d'un mouvement alternatif de période égàle à celle du piston du cylindre dont il commandent la distribution dans la chambre de détente, et de seconds éléments solidaires des obturateurs liés mécaniquement aux premiers par des liens de force.

3.   Machine hydraulique selon la revendication 2 caractérisée par le fait que le lien de force soit le frottement mécanique.

4.   Machine hydraulique selon la revendication 1 caractérisée en ce que certaines des soupapes de distribution sont commandées par la pression qui règne dans la chambre de pompage du même cylindre de la chambre de détente dont ces valves commandent la distribution et par la pression qui règne dans cette chambre de détent agissante en sens contraire, de sorte que, par l'action des système qui limitent la difference de pression entre ces deux chambres, la force de commande resultant sur les soupapes de distribution soit limitée.

5.   Machine hydraulique selon la revendication 4 caractérisée en ce que les systèmes qui limitent la différence de pression entre la chambre de détente et celle de pompage sont une ou plusieures soupapes qui permettent le passage du liquide entre les deux chambres lorsque la différence de pression entre celles-ci dépasse une certaine valeur, et qui sont reglées de façon à ce qu'elles restent fermées pendant les "phases active" et "passive".

6.   Machine hydraulique selon la revendication 4 caractérisée en ce que les systèmes qui limitent la différence de pression entre la chambre de detente et celle de pompage sont une ou plusieures soupapes d'étranglement.

7.   Machine hydraulique selon la revendication 6 caractérisée en ce que le système qui limitent la différence de pression entre la chambre de detente et celle de pompage est constituée par un trou de communication entre les deux chambres.

8.   Machine hydraulique selon la revendication 4 caractérisée en ce que les systèmes qui limitent la différence de pression entre la chambre de detente et celle de pompage sont des systèmes élastiques interposés entre les deux chambres, de sorte que les différences de pression entre les deux chambres soyent absorbées en partie par le déplacement de ces systèmes, qui tendent à recuperer leur position d'équilibre en étant des systèmes elastiques.

9.   Machine hydraulique selon la revendication 4 caractérisée en ce que les différences de pression $(P4-P1)$ et $(P2-P3)$ qui actionnent l'ouverture des soupapes 64 et 63 sont augmentées, $P1$ et $P2$ étant respectivement les pressions d'adduction et de refoulement du liquide a pomper et $P3$ et $P4$ étant respectivement les pressions d'adduction et de refoulement du liquide à détendre.

10.  Machine hydraulique selon la revendication 9 caractérisée en ce que les différences de pression $(P4-P1)$ et $(P2-P3)$ qui actionnent l'ouverture des soupapes 64 et 63 sont augmentées par des soupapes d'étranglement placées à la sortie du tuyau de refoulement du liquide à détendre (47) et à la sortie du tuyau de refoulement du liquide à pomper (43), ce qui cause l'augmentation des pressions $P2$ et $P4$.

11.  Emploi de la machine sélon la révendication 1, dans les installations qui mettent en action des procédés de membrane pour le traitement des liquides par osmose inverse.

12. Emploi de la machine sélon la révendication 1, comme moteur, pour la conversion de l'énergie des gradients de salinité en énergie mécanique, par des procédés d'osmose directe.

13. Emploi de la machine sélon la révendication 1, dans les machines termiques à absorption à cycle continu, pour assurer la circulation du mélange réfrigérant-absorbent entre le bouilleur et l'absorbeur.

**Claims**

1. Hydraulic displacement machine with pistons (or plungers) which is able to exchange mechanical work with the outside and which, at the same time, effects the pumping of one fluid and the depressurisation of another with recovery of the hydraulic pressure energy, which can be used, for example, in installations for the desalination of sea water by reverse osmosis, consisting of a drive system, for example a crank mechanism, which communications a reciprocating rectilinear movement to one or more pistons (or plungers), some of which are differential pistons (or plungers) (35) inserted into double-acting cylinders (36), the volume of which is divided into two chambers (37) and (38) by the differential piston (or plunger) (35) and by sealing systems, one of the two chambers, referred to as the "pumping chamber" (38), communicates with a pipe for the supply (42) or discharge (43) of the liquid to be pumped, through non-return valves (44) and (45), so as to effect the pumping of this liquid, whilst the other chamber, referred to as the "depressurisation chamber" (37), communicates with piles for the supply (46) and discharge (47) of the fluid to be depressurised through one or more controlled distribution valves for supply (48, 63) and discharge (49, 64), which put the depressurisation chamber in communication with the pipe (46) for supplying the fluid to be depressurised for a fraction of the cycle in which, overall, the depressurisation chamber increases its volume, and put the depressurisation chamber in communication with the pipe (47) for discharging the liquid to be depressurised for a fraction of the cycle in which, overall, the depressurisation decreases its volume, comprising one or more devices suitable for limiting the pressure difference between the depressurisation chamber and the pumping chamber of any one cylinder, characterised in that the controlled distribution valves are valves which are not completely balanced, that is to say valves whose opening is contrasted by the pressure difference upstream and downstream of the valve, controlled by a system capable of exerting a limited force on the moving components for closing off these valves and by the fact that the system which controls the valve (48, 63) for supplying the fluid to the depressurisation chamber is able to exert a maximum force on its obturator which is not sufficient to cause its opening in the presence of the pressure gradient existing between upstream and downstream of the valve round about the dead point in which the volume of the depressurisation is at its minimum, and by the fact that the system which controls the valve (49, 64) for discharging the fluid in the depressurisation chamber is able to exert a maximum force on its obturator which is not sufficient to cause its opening in the presence of the pressure gradient existing between upstream and downstream of the valve round about the dead point in which the volume of the depressurisation is at its maximum, thus ensuring that the opening of the supply valve (48, 62) is dependent on the dead point, in which the volume of the depressurisation chamber is at its minimum, being exceeded, and on the closure of the supply valve (49, 64), and that the opening of the supply valve (49, 64) is dependent on the dead point in which the volume of the depressurisation chamber is at its maximum is exceeded, and on the closure of the supply valve (48, 63), which are followed by the decrease in the pressure gradient upstream and downstream of the valve (49, 64).

2. Hydraulic machine according to Claim 1, characterised in that the systems for actuating the distribution valves (48) and (49) of the depressurisation chamber are composed of first components (70, 71) with a reciprocating movement of a period equal to that of the piston in the cylinder whose distribution into the depressurisation chamber it controls, and second components fixed to the obturators mechanically linked to the first by force links.

3. Hydraulic machine according to Claim 2, characterised in that the force link is mechanical friction.

4. Hydraulic machine according to Claim 1, characterised in that some of the distribution valves are controlled by the pressure prevailing in the pumping chamber of the same cylinder of the depressurisation chamber for which these valves control the distribution and by the pressure prevailing in this depressurisation chamber acting in the opposite direction, so that, by the action of the systems which limit the pressure difference between these two chambers, the resulting control force on the distribution valves is limited.

5. Hydraulic machine according to Claim 4, characterised in that the systems which limit the pressure difference between the depressurisation chamber and pumping chamber are one or more valves which allow the passage of the liquid between the two chambers when the pressure difference between them exceeds a certain value, and which are regulated so that they remain closed during the "active phase" and "passive phase".

6. Hydraulic machine according to Claim 4, characterised in that the systems which limit the pressure difference between the depressurisation chamber and pumping chamber are one or more throttling valves.

7. Hydraulic machine according to Claim 6, characterised in that the system which limits the pressure difference between the depressurisation chamber and pumping chamber consists of a hole communicating between the two chambers.

8. Hydraulic machine according to Claim 4, characterised in that the systems which limit the pressure difference between the depressurisation chamber and pumping chamber are elastic systems interposed between the two chambers, so that the pressure differences between the two chambers are partly absorbed by the movement of these systems, which tend to recover their equilibrium position by being elastic systems.

9. Hydraulic machine according to Claim 4, characterised in that the pressure differences (P4-P1) and (P2-P3) which actuate the opening of the valves 64 and 63 are increased, P1 and P2 being respectively the supply and discharge pressures of the liquid to be pumped and P3 and P4 being respectively the supply and discharge pressures of the liquid to be depressurised.

10. Hydraulic machine according to Claim 9, characterised in that the pressure differences (P4-P1) and (P2-P3) which actuate the opening of the valves 64 and 63 are increased by throttling valves placed at the outlet from the discharge pipe for the liquid to be depressurised (47) and at the outlet from the supply pipe for the liquid to be pumped (43), which causes the increase in the pressures P2 and P4.

11. Use of the machine according to Claim 1, in installations which operate membrane processes for treating liquids by reverse osmosis.

12. Use of the machine according to Claim 1, as a motor, for converting the energy of the salinity gradients into mechanical energy, by direct osmosis processes.

13. Use of the machine according to Claim 1, in continuous-cycle absorption thermal machines, for ensuring the circulation of the refrigerant/absorbent mixture between the heating tube and the absorber.

**Patentansprüche**

1. Hydraulische Kolben- oder Tauchkolbenverdrängungsmaschine, die mechanische Arbeit mit der Umgebung austauschen kann und die eine Flüssigkeit pumpt und gleichzeitig eine weitere Flüssigkeit bei Rückgewinnung der hydraulischen Druckenergie entspannt, welche beispielsweise in Meerwasserentsalzungsanlagen mit Umkehrosmose genutzt werden kann, bestehend aus einem Antriebssystem, beispielsweise einem Kurbelgetriebe, das eine geradlinige Umkehrbewegung auf einen oder mehrere Kolben oder Tauchkolben überträgt, von denen einige Stufenkolben oder -tauchkolben (35) sind, die in doppeltwirkende Zylinder (36) eingebaut sind, deren Volumen durch den Stufenkolben oder -tauchkolben (35) und Dichtungssysteme in zwei Kammern (37 und 38) aufgeteilt ist; eine der beiden Kammern, die "Pumpkammer" (38) heißt, steht über Rückschlagventile (44 und 45) mit einem Zuleitungsrohr (42) und einem Druckrohr (43) für die zu pumpende Flüssigkeit in Verbindung, so daß diese Flüssigkeit in die andere Kammer gepumpt werden kann, die "Entspannungskammer" (37) heißt, die über ein oder mehrere gesteuerte Zuleitungs- (48 und 63) und Druckwegeventile (49 und 64) mit Zuleitungsrohren (46) und Druckrohren (47) für die zu entspannende Flüssigkeit verbunden ist; die Wegeventile verbinden die Entspannungskammer mit dem Zuleitungsrohr (46) für die zu entspannende Flüssigkeit während eines Taktteils, in dem insgesamt die Entspannungskammer ihr Volumen vergrößert und setzt in Verbindung die Entspannungskammer mit dem Druckrohr (47) für die zu entspannende Flüssigkeit während eines Taktteils, wo im gesamten die Entspannungskammer ihr Volumen verkleinert; die Maschine umfaßt eine oder mehrere Vorrichtungen, die den Druckunterschied zwischen der Entspannungs- und der Pumpkammer ein- und desselben Zylinders begrenzen können, und ist dadurch gekennzeichnet, daß die gesteuerten Wegeventile nicht vollständig druckentlastete Ventile sind, das heißt Ventile, deren Öffnung kontrastiert zum Druckunterschied entgegen der Strömungsrichtung und in Strömungsrichtung und die außerdem gesteuert werden durch ein System, das eine Kraft begrenzt durch die beweglichen Absperrorgane dieser Ventile ausüben kann, sowie dadurch gesteuert werden, daß das System, welches das Ventil (48, 63) für die Einspeisung der Flüssigkeit in die Entspannungskammer steuert, imstande ist, eine maximale Kraft auf den Kammerverschluß auszuüben, wobei diese Kraft aber nicht ausreicht, bei vorhandenem Druckgradienten vor und hinter dem Ventil in der Nähe des Totpunktes, bei dem das Volumen der Enspannungskammer am kleinsten ist, die Kammer zu öffnen; die Ventile werden ebenfalls dadurch gesteuert, daß das System, welches das Druckventil (49, 64) für die Einspeisung der Flüssigkeit in die Entspannungskammer steuert, imstande ist, eine maximale Kraft auf den Kammerverschluß auszuüben, wobei diese Kraft aber nicht ausreicht, bei vorhandenem Druckgradienten vor und hinter dem Ventil in der Nähe des Totpunktes bei dem das Volumen der Entspannungskammer am größten ist, die Kammer zu öffnen, wodurch somit erreicht wird, daß das Öffnen des Zuleitungsventils (48, 63) dem Überschreiten des Totpunktes, bei dem das Volumen der Entspannungskammer am kleinsten ist, und dem Schließen des Druckventils (49, 64) untergeordnet ist und daß das Öffnen des Druckventils (49, 64) dem Überschreiten des Totpunktes, bei dem das Volumen der Entspannungskammer am größten ist, und dem Schließen des Zuleitungsventils (48, 63) untergeordnet ist, worauf der Druckgradient vor und hinter dem Ventil (49, 64) verkleinert wird.

2.  Hydraulische Machine entsprechend Anspruch 1 und dadurch gekennzeichnet, daß die Steuersysteme der Wegeventile (48,49) für die Entspannungskammer aus ersten Teilen (70, 71), welche in eine Umkehrbewegung von gleicher Zeitdauer wie der Kolben im Zylinder versetzt werden und die den Kolben in der Entspannungskammer steuern, und aus zweiten, mit den Verschlüssen verbundenen Teilen bestehen, wobei die ersten Teile mit den zweiten durch Kraftschlüsse mechanisch verbunden sind.

3.  Hydraulische Maschine entsprechend Anspruch 2 und dadurch gekennzeichnet, daß der Kraftschluß mechanische Reibung ist.

4.  Hydraulische Maschine entsprechend Anspruch 1 und dadurch gekennzeichnet, daß einige der Wegeventile durch den Druck, der in der Pumpkammer des gleichen Zylinders wie der der Entspannungskammer herrscht und dessen Verteilung diese Ventile steuern, und durch den Druck gesteuert werden, der in dieser und im entgegengesetzten Sinn wirkenden Entspannungskammer herrscht, so daß durch das Wirken der Systeme, die den Druckunterschied zwischen diesen beiden Kammern begrenzen, die auf die Wegeventile einwirkende Steuerkraft begrenzt wird.

5.  Hydraulische Maschine entsprechend Anspruch 4 und dadurch gekennzeichnet, daß die Systeme, die den Druckunterschied zwischen Entspannungs- und Pumpkammer begrenzen, ein oder mehrere Ventile sind, welche die Flüssigkeit zwischen beiden Kammern durchlaufen lassen, wenn der Druckunterschied zwischen letzteren einen bestimmten Wert überschreitet; die Ventile werden so eingestellt, daß sie in der "aktiven" und "passiven Phase" geschlossen bleiben.

6.  Hydraulische Maschine entsprechend Anspruch 4 und dadurch gekennzeichnet, daß die Systeme, die den Druckunterschied zwischen Entspannungs- und Pumpkammer begrenzen, ein oder mehrere Drosselventile sind.

7.  Hydraulische Maschine entsprechend Anspruch 6 und dadurch gekennzeichnet, daß das System, das den Druckunterschied zwischen Entspannungs- und Pumpkammer begrenzt, aus einem Verbindungsbohrloch zwischen beiden Kammern gebildet wird.

8.  Hydraulische Maschine entsprechend Anspruch 4 und dadurch gekennzeichnet, daß die Systeme, die den Druckunterschied zwischen Entspannungs- und Pumpkammer begrenzen, elastische, zwischen beide Kammern eingefügte Systeme sind, so daß durch die Verschiebung dieser Systeme, die bestrebt sind, als elastische Systeme in ihre Gleichgewichtslage zurückzukehren, die Druckunterschiede zwischen beiden Kammern teilweise ausgeglichen werden.

9. Hydraulische Maschine entsprechend Anspruch 4 und dadurch gekennzeichnet, daß die Druckunterschiede (P4-P1) und (P2-P3), welche die Ventile 64 und 63 öffnen, vergrößert werden, wobei P1 und P2 der Druck im Ansaugstutzen beziehungsweise der Förderdruck der zu pumpenden Flüssigkeit, P3 und P4 der Druck im Ansaugstutzen beziehungsweise der Förderdruck der zu entspannenden Flüssigkeit ist.

10. Hydraulische Maschine entsprechend Anspruch 9 und dadurch gekennzeichnet, daß die Druckunterschiede (P4-P1) und (P2-P3), welche die Ventile 64 und 63 öffnen, durch Drosselventile an der Austrittsöffnung des Druckrohrs für die zu entspannende Flüssigkeit (47) und an der Austrittsöffnung des Druckrohrs für die zu pumpende Flüssigkeit (43) vergrößert werden, was die Drücke P2 und P4 erhöht.

11. Verwendung der Maschine entsprechend Anspruch 1 in Anlagen, die Verfahren mit Membranen für die Aufbereitung von Flüssigkeiten durch Umkehrosmose anwenden.

12. Verwendung der Maschine entsprechend Anspruch 1 als Motor für die Umwandlung der Energie des Salzgehaltsgradlenten in mechanische Energie durch direktosmotische Verfahren.

13. Verwendung der Maschine entsprechend Anspruch 1 in kontinuierlich arbeitenden Absorber-Wärmekraftmaschinen, um die Umwälzung des Kühl- und Absorptionsmittelgemischs zwischen Verdampfer und Absorber zu gewährleisten.

fig. 1

fig. 2

fig. 3

fig. 4

fig. 5

fig. 6

fig. 7

fig. 8

EP 0 450 257 B1

15